# EUROPEAN PATENT APPLICATION

(11) **EP 4 456 309 A1**
(43) Date of publication of application: **30.10.2024**
(21) Application number: 23741580.7
(22) Date of filing: 26.04.2023
(51) Int. Cl.: H01M 50/507, H01M 50/51, H01M 50/519, H01M 50/569, H01M 10/653, H01M 50/209, H01M 50/213, H01M 50/244, H01M 50/264, H01M 50/291, H01M 50/293, H01M 50/30, H01M 50/503, H01M 50/522, H01M 50/588, H01M 50/59

(54) **CCS ASSEMBLY, BATTERY MODULE AND BATTERY PACK**

(30) Priority: 10.03.2023 CN 202320458140 U; 10.03.2023 CN 202320458357 U
(71) Applicant: Eve Energy Co., Ltd., Huizhou, Guangdong 516006 (CN)
(72) Inventor: REN, Chaoju, Huizhou, Guangdong 516006 (CN); LU, Jungao, Huizhou, Guangdong 516006 (CN); ZHANG, Guojiang, Huizhou, Guangdong 516006 (CN); JIANG, Jibing, Huizhou, Guangdong 516006 (CN)
(74) Representative: Petraz, Gilberto Luigi
(86) International application number: PCT/CN2023/090735
(87) International publication number: WO 2024/187556

(57) **Abstract**

Provided in the present application is a CCS assembly, battery module and battery pack; the CCS assembly includes a tray; a positive busbar provided on an end of the tray; a negative busbar provided on an opposite end of the tray; a guide bar provided on the tray, a plurality of the guide bars being sequentially connected in series, the positive busbar and the negative busbar are connected to the adjacent guide bar in series respectively; a flexible circuit board provided on a side of the tray, a mounting base being provided on two ends of a supporting frame; and a connector provided on the mounting base, the flexible circuit board being connected to the connector.

## Description

The present application claims priority of Chinese Patent Application No.202320458140.8 filed on March 10, 2023 before CNIPA, and Chinese Patent Application No.202320458357.9 filed on March 10, 2023 before CNIPA. All the above are hereby incorporated by reference in their entireties.

### Field

The present application relates to the technical field of batteries, in particular to a Combined Charging System (CCS) assembly, a battery module and a battery pack.

### Background

Currently, most of the CCS assemblies of cylindrical power batteries are one type of module corresponding to one type of CCS assembly. Specifically, the classification of the module is mainly based on the positions of the connector and the busbar on the CCS assembly. For example, when the connector of the CCS assembly of the battery module is provided close to the positive side of the busbar, the battery module may be named as a positive module; when the connector of the CCS assembly of the battery module is provided close to the negative side of the busbar, the battery module may be named as a negative module. This means that two types of battery modules correspond to two types of CCS assembly, and the materials are incompatible, which leads to an increase in the molding and manufacturing cost of products in production, which further leads to an increase in material types, so that the difficulty in managing and controlling the material increases, thereby affecting the industrial production schedules.

Additionally, most of the current cylindrical battery modules adopt a "serpentine tube" for cooling, whereas this cooling structure leads to a complex forming process and low assembly efficiency of the battery modules. At the same time, the "serpentine tube" is generally provided between battery cells, which reduces the density of the battery cells in the battery module, thereby reducing the energy density of the battery module.

### Summary

In view of the deficiencies of the prior art, the first objective of the present application is to provide a CCS assembly, which may realize the material compatibility in different types of battery modules, saving manufacturing cost.

The second objective of the present application is to provide a battery module, which has high assembling efficiency, large energy density, and is easy to process and produce.

The third objective of the present application is to provide a battery pack with low manufacturing cost, and high heat-dissipating efficiency.

As the first objective, provided in the embodiment of present application is a CCS assembly, including: a tray; a positive busbar, provided on an end of the tray, the end of the tray on which the positive busbar is assembled being a positive end; a negative busbar, provided on an opposite end of the tray, opposite to the positive busbar, the end of the tray on which the negative busbar is assembled being a negative end; guide bars, provided on the tray, a plurality of guide the bars being connected in series in sequence along the positive busbar to the negative busbar, the positive busbar and the negative busbar being connected in series with their adjacent guide bars respectively; a flexible circuit board, provided on a side in width direction of the tray, the positive end and the negative end being both provided with a mounting base respectively; and a connector, the mounting base being provided for mounting the connector, the flexible circuit board being connected to the connector.

In one embodiment, a detecting nickel sheet is provided on the flexible circuit board, in which the detecting nickel sheet is provided for connecting at least one of the positive busbars, the negative busbars and the guide bars; accommodating slots are provided on two sides in the width direction of the tray, provided for accommodating the detecting nickel sheet on the flexible circuit board.

In one embodiment, a plurality of the accommodating slots on one side in the width direction of the tray is defined as a first slot group, while a plurality of the accommodating slots on another side in the width direction of the tray is defined as a second slot group;

In one embodiment, the mounting base on the positive end and the mounting base on the negative end are provided on the tray centrosymmetrically.

In one embodiment, the mounting base and the tray are integrally formed by injection molding.

In one embodiment, a fixing slot for accommodating the battery cell is provided on an interior side of the tray, in which a positive hole and a negative hole are penetratingly provided on a bottom of the fixing slot; the positive hole is provided for exposing a positive electrode of the battery cell on an exterior side of the tray, while the negative hole is provided for exposing a negative electrode of the battery cell on the exterior side of the tray; and the accommodating slot is provided on the exterior side of the tray, in which the accommodating slot is in communication with the positive hole and/or the negative hole of the fixing slot adjacent thereto.

In one embodiment, the accommodating slot is in communication with the negative hole of the fixing slot adjacent thereto.

In one embodiment, in the width direction of the tray, the mounting base of the positive end and the mounting base of the negative end are provided staggered.

As the second objective, provided in the embodiment of the present application is a battery module, including the CCS assembly mentioned above.

In one embodiment, the battery module further includes: a battery supporting frame; battery cells, mounted on an upper side of the battery supporting frame, the CCS assembly being lapped on an upper side of the battery cells, the CCS assembly being provided for connecting two adjacent battery cells in series in the length direction of the battery supporting frame, and connecting two adjacent battery cells in parallel in the width direction of the battery supporting frame; and thermally conductive structural adhesive, coated on an upper surface of the CCS assembly, so that heat of the battery module is dissipated through a side of the thermally conductive structural adhesive.

In one embodiment, a distance between two adjacent battery cells is not less than 2 mm.

In one embodiment, the battery supporting frame is penetratingly provided with pressure relief holes corresponding to the battery cells, so that explosion-proof valves of battery cells are exposed on a lower surface of the battery supporting frame ; supporting frame through the pressure relief holes corresponding to the battery cells; and an extending protrusion is provided on the lower surface of the battery supporting frame, the extending protrusion being provided in a direction extending away from the battery supporting frame.

In one embodiment, a plurality of the extending protrusions is evenly spaced circumferentially around each pressure relief hole.

In one embodiment, a side of the extending protrusion near the pressure relief hole is provided with a cushioning surface, in which the cushioning surface is a rounded arc surface whose center of curvature is located on a side of the pressure relief hole.

In one embodiment, a reinforcing rib is provided on the cushioning surface, the reinforcing rib extending towards the side of the pressure relief hole; and the reinforcing rib is connected to the battery supporting frame.

In one embodiment, a plurality of restricting protrusions is provided around a perimeter of the pressure relief hole; the restricting protrusion is provided with a restricting surface towards a side of the pressure relief hole; the restricting surface is a rounded arc surface whose center of curvature is located in the side of the pressure relief hole; and the restricting protrusions are located on an upper surface of the battery supporting frame.

As the third objective, provided in the embodiment of the present application is a battery pack, including the battery module mentioned above.

The technical solution adopted in the embodiments of the present application has as least the advantages and beneficial effects as follows:

Both the positive end and the negative end of the tray of the CCS assembly in the present application are provided with a mounting base for assembling connectors. When in use, in the manufacturing condition of different types of battery modules, the user may selectively install the connectors on the mounting base of the positive end and the mounting base of the negative end to adapt to the corresponding manufacturing requirements of the positive module and the negative module. The structural design of the tray may effectively address the problem of incompatibility of the materials of the CCS assembly when manufacturing different battery modules, which reduces the manufacturing cost of the battery module, so as to reduce the difficulty in managing and controlling the materials, thereby improving the manufacturing schedules.

The battery supporting frame of the present application provides support for the battery cells, provided for cooperating with the CCS assembly to restrict and fix the battery cells along a longitudinal direction; on the one hand, the thermally conductive structural adhesive coated on the upper surface of the CCS assembly may adhere and fix each component of the CCS assembly, which facilitates the CCS assembly to be fed as a whole and increases the assembling efficiency of the battery module; on the other hand, the thermally conductive structural adhesive may conduct the heat inside the battery module through the part of thermally conductive structural adhesive, so as to dissipate the heat generating from the working process of the battery module from here, so that a step of mounting a serpentine tube between the battery cells may be avoided, which may increase the density of the battery cells inside the battery module effectively, thereby increasing the energy density of the battery module.

### Brief description of the drawings

In order to illustrate the technical solutions of the embodiments of the present application more clearly, the following drawings are briefly described as required in the context of the embodiments. It should be understood that the following drawings only illustrate only some of the embodiments of the present application and should therefore not be considered as limiting the scope. Other relevant drawings may be obtained on the basis of these drawings without any creative effort by those skilled in the art.
Fig. 1 is an exploded view of a structural diagram of the CCS assembly provided in the embodiments of the present application;
Fig. 2 is a top view of a structural diagram of the tray provided in the embodiments of the present application;
Fig. 3 is a bottom view of a structural diagram of the tray provided in the embodiments of the present application;
Fig. 4 is a front view of a structural diagram of the guide bar provided in the embodiments of the present application;
Fig. 5 is a perspective view of a structural diagram of the battery cell provided in the embodiments of the present application;
Fig. 6 is a structural diagram of the negative module provided in the embodiments of the present application;
Fig. 7 is a structural diagram of the positive module provided in the embodiments of the present application;
Fig. 8 is a structural diagram of the battery module provided in the embodiments of the present application;
Fig. 9 is a first perspective view of a structural diagram of the battery supporting frame provided in the embodiments of the present application;
Fig. 10 is a second perspective view of a structural diagram of the battery supporting frame provided in the embodiments of the present application;
Fig. 11 is a bottom view of a structural diagram of the battery supporting frame provided in the embodiments of the present application.
   Labels: 100 battery cell; 101 positive electrode; 102 negative electrode; 200 CCS assembly; 210 positive busbar; 211 guide bar; 2111 main body; 2112 positive zone; 2113 negative zone; 2114 connecting segment; 212 negative busbar; 220 connector; 230 flexible circuit board; 231 connecting part; 232 extending part; 233 detecting nickel sheet; 240 tray; 241 mounting base; 242 positive hole; 243 negative hole; 244 temperature detecting hole; 245 accommodating slot; 246 fixing slot; 300 thermally conductive structural adhesive; 400 battery supporting frame; 410 pressure relief hole; 420 restricting protrusion; 421 restricting surface; 430 extending protrusion; 431 cushioning surface; 432 reinforcing rib; 440 pressure relief gap.

### Detailed description of the preferred embodiments

In the description of the present application, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description and simplify operation, but not to indicate or imply that the referred device or element has a specific orientation, or is constructed and operated in a specific orientation. Therefore, they should not be construed as a limitation of the present application.

In the description of the present application, unless otherwise explicitly specified and limited, the terms "first", and "second" are used for descriptive purposes only and are not to be construed as indicating or implying relative importance. The term "plurality" refers to two or more. The term "and/or" includes any and all combinations of one or more related listed items. Specifically, "the" object or "an" object is also intended to indicate one of a possible plurality of such objects.

Unless otherwise defined, all terms including technical and scientific terms used in the present application have the same meaning as commonly understood by those skilled in the art to which the present application belongs. The terms used in the specification of the present application are used only to describe specific embodiments and are not intended as a limitation of the application. The terms "comprise" and "include" and derivatives thereof in the description, claims, and description of the drawings of the present application are intended to be interpreted non-exclusively, that is, as conveying "comprising", or "including".

Further, in the description of the present application, it is to be understood that the references to "upper", "lower", "interior", "exterior" and other orientation words are described in the perspective shown in the attached drawings and should not be understood as limiting the specific embodiment. It is also to be understood that in the context, when reference is made to an element or feature being connected to "upper", "lower", or "interior", "exterior" of another (one or more) element, it is not only possible for it to be directly connected to "upper", "lower", or "interior", "exterior" of another (one or more) element, but also indirectly connected to "upper", "lower", or "interior", "exterior" of another (one or more) element via an intermediate element.

### Embodiment 1

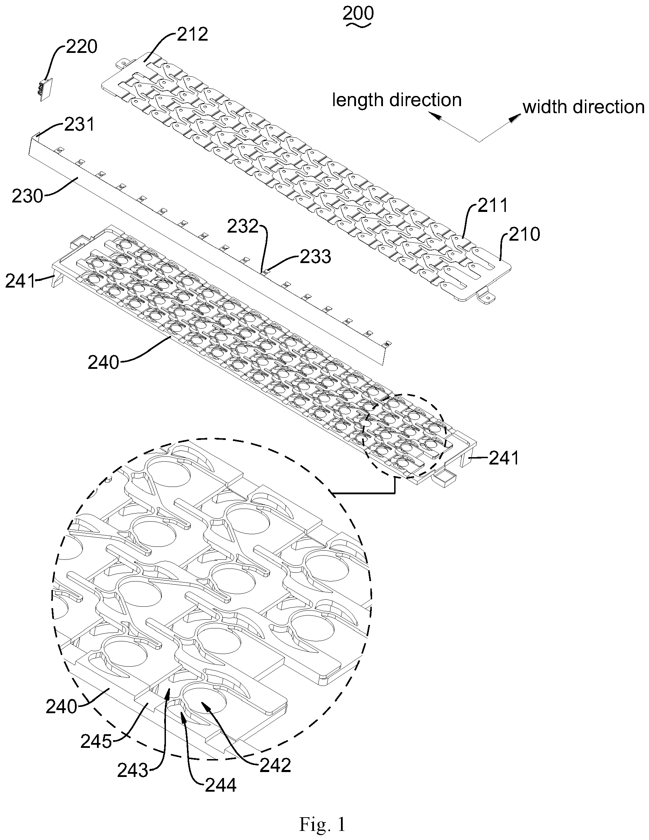

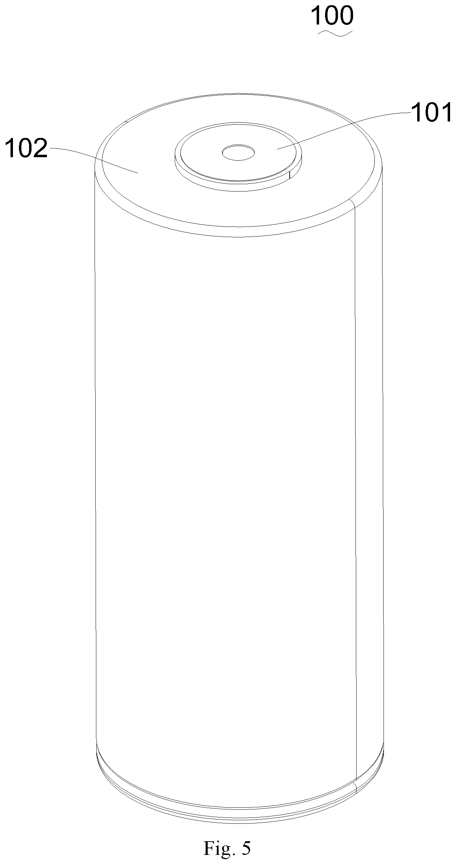

Referring to Fig. 1-7, a CCS assembly is applied to a cylindrical power battery module, in which the cylindrical power battery module includes a plurality of battery cells 100. As shown in Fig. 5-7, the positive electrode 101 and the negative electrode 102 of the battery cell 100 are located on the same side, and the positive electrode 101 protrudes from the negative electrode 102 along an axial direction of the battery cell 100. Specifically, the CCS assembly 200 includes a tray 240, a positive busbar 210, a negative busbar 212, a guide bar 211 and a flexible circuit board 230. The positive busbar 210 is provided on an end of the tray 240; the negative busbar 212 is provided on an opposite end of the tray 240; the negative busbar 212 is provided with the positive busbar 210 oppositely; a plurality of the guide bars 211 is provided on the tray, sequentially connected in series along the positive busbar 210 to the negative busbar 212; the positive busbar 210 and the negative busbar 212 are connected in series to the adjacent guide bar 211 respectively; the flexible circuit board 230 is provided on a side of the tray 240 along a width direction; an end of the tray 240 for assembling the positive busbar 210 is defined as a positive end, while an end of the tray 240 for assembling the negative busbar 210 is defined as a negative end; and both the positive end and the negative end are provided with a mounting base 241 for assembling a connector 220, a flexible circuit board 230 being connected to the connector 220.

In the present embodiment, adopting a structural design by integrating the positive busbar 210, the negative busbar 212 and the guide bar 211 on the tray 240, it may be realized that the CCS assembly 200 is fed as a whole, which may reduce the time and steps of assembling the CCS assembly 200 and the battery cells into a battery module, thereby effectively increase the assembling efficiency. Optionally, the tray 240 herein is a plastic part formed by injection molding. The tray 240 made of plastic is light and strong enough to provide effective support for the positive busbar 210, the guide bars 211 and the negative busbar 212.

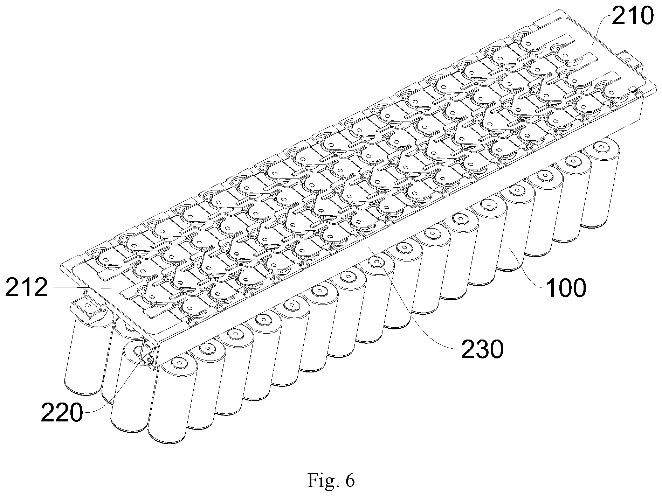

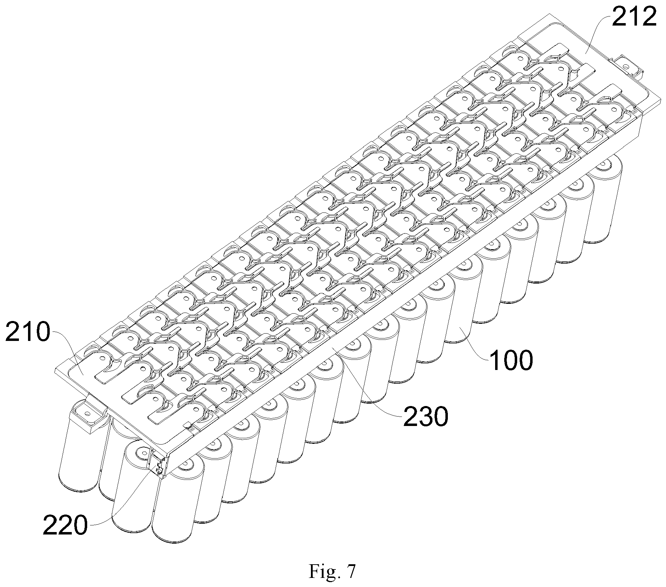

In the present embodiment, as shown in Fig. 6 and Fig. 7, the CCS assembly 200 is used for connecting each battery cell 100 in series in a length direction of the battery module and selectively collecting voltage signals or temperature signals from the battery cells 100 in that direction to achieve temperature and voltage signal monitoring of the battery cells 100 within the battery module and to manage the battery module in conjunction with the Battery Management System (BMS).

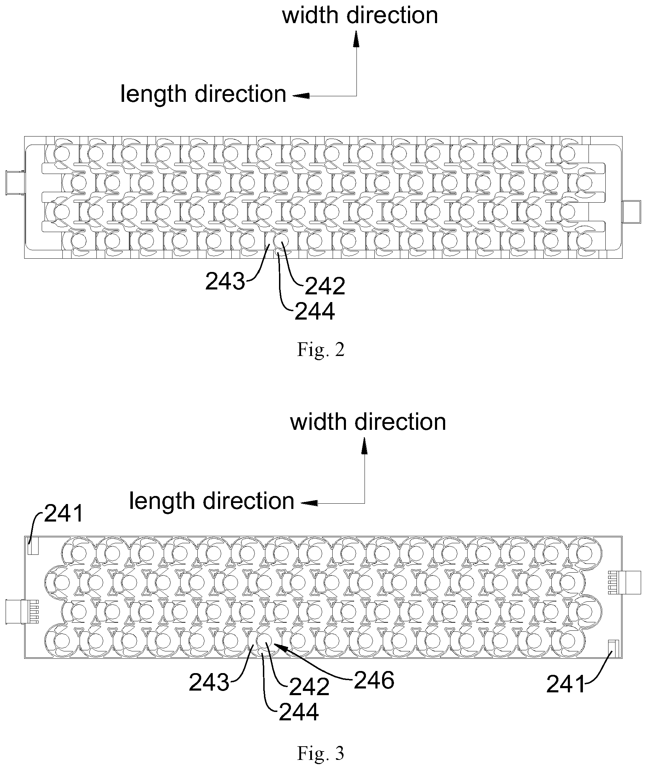

Further, as shown in Fig. 1 and Fig. 3, both the positive end and the negative end of the tray 240 of the CCS assembly in the present application are provided with a mounting base 241 for assembling connectors 220. When in use, in the manufacturing condition of different types of battery modules (positive module and negative module), the user may selectively install connectors 220 on the mounting base 241 of the positive end and the mounting base 241 of the negative end to adapt to corresponding manufacturing requirements of the positive module and the negative module. The structural design of the tray 240 may effectively address the problem of incompatibility of the materials of the CCS assembly 200 when manufacturing different battery modules, which reduces the manufacturing cost of the battery module, so as to reduce the difficulty in managing and controlling the materials, thereby improving the manufacturing schedules. As shown in Fig. 6 and Fig. 7 are the negative module and the positive module respectively.

Further, as shown in Fig. 1 and Fig. 3, the mounting base 241 on the positive end and the mounting base 241 on the negative end are provided on the tray 240 centrosymmetrically. The tray 240 herein is in general rectangular in shape. The positive end and the negative end are located on two ends of the tray 240 in the length direction. The two mounting bases 241 provided centrosymmetrically enable the tray 240 when in use to be adapted to different types of assembly of battery modules by rotating it 180° along the centrosymmetric point of the two mounting bases 241. As shown in Fig. 6, in such a state, the battery module is a negative module; by rotating it 180° along the centrosymmetric point of the two mounting bases 241, reassembling the tray 240 of the CCS assembly 200 onto the battery cells, so that the battery module forms a positive module as shown in Fig. 7. It is to be noted that the assembling position of the flexible circuit board 230 on the tray 240 may be adjusted based on demand after adjusting the tray 240, as long as it may selectively collect voltage signals or temperature signals from the battery cells 100 in a length direction of the battery module and it may be connected to the corresponding connector 220.

Preferably, the mounting base 241 and the tray 240 are integrally formed by injection molding.

In the present embodiment, as shown in Fig. 1 to Fig. 4, the positive busbar 210, a plurality of the guide bars 211 and the negative busbar 212 are sequentially arranged in a length direction of the battery module, used for connecting adjacent battery cells 100 in parallel in a width direction of the tray 240 and connecting adjacent battery cells 100 in series in a length direction of the tray 240. In the present embodiment, a plurality of battery cells 100 constituting the cylindrical power battery module is arranged in an array in the length direction of the tray 240 to form a battery unit of the cylindrical power battery module. As shown in Fig. 6 and Fig. 7, the cylindrical power battery module of the present embodiment includes four battery units provided in parallel. In order to increase the energy density, four battery units provided in parallel are provided overlapping in the width direction of the tray 240, and battery cells 100 of the four battery units are provided staggered in the length direction of the tray 240, so that more cylindrical battery cells 100 may be provided on the same area.

A battery cell 100 connected to the positive busbar 210 is defined as a first battery and a battery cell 100 adjacent to the first battery in the length direction of the tray 240 as a second battery, that is, in the length direction of the tray 240, each battery cell 100 of the battery unit is defined sequentially as a first battery, a second battery, until an N^{th} battery (N≥1, and N is a positive integer), i.e., N battery cells 100 are provided in an array in a length direction of the tray 240 in a battery unit. When in use, the positive busbar 210 is connected to a positive electrode 101 of the first battery, an end of the guide bar 211 adjacent to the positive busbar 210 in a length direction of the tray 240 is connected to a negative electrode 102 of the first battery, and a second end of the guide bar 211 is connected to a positive electrode 101 of the second battery; it is to be understood that an amount of the guide bars 211 located between the positive busbar 210 and the negative busbar 212 in the length direction of the tray 240 is N-1. For example, ten battery cells 100 are provided in an array in the length direction of the tray 240 in a battery unit, then nine guide bars 211 are required to connect these ten battery cells 100 in series. Similarly, an end of the N-1^{th} guide bar 211 is connected to a negative electrode 102 of the N-1^{th} battery cell 100, a second end of the N-1^{th} guide bar 211 is connected to a positive electrode 101 of the N^{th} battery cell 100, and the negative busbar 212 is connected to a negative electrode 102 of the N^{th} battery cell 100, so that the connection of N battery cells 100 in series is realized in the length direction of the tray 240 by the positive busbar 210, guide bars 211 and the negative busbar 212. At the same time, the battery cells 100 of four battery units provided overlapping in the width direction of the tray 240 are connected in parallel by guide bars 211 so that the current of a plurality of battery cells 100 of four battery units provided overlapping in the width direction of the tray 240 is balanced distributed. The reliability of the connection between the battery cells 100 is ensured.

In other embodiments, a cylindrical power battery module may be constituted by one or more battery units. When the cylindrical power battery module is constituted by a plurality of battery units, that is, a plurality of battery units of the cylindrical power battery module is provided overlapping in the width direction of the tray 240; accordingly, the guide bars 211 may be connected to these battery units in parallel in the width direction of the tray 240; it is to be noted that the positive busbar 210 and the negative busbar 212 are both provided with a plurality of ends corresponding to a plurality of battery units, used for connecting the positive electrodes 101 and the negative electrodes 102 of the battery cells 100, so that the first or the last battery cell 100 in the length direction of the tray 240 of a plurality of the battery units may be connected in parallel in the width direction of the tray 240.

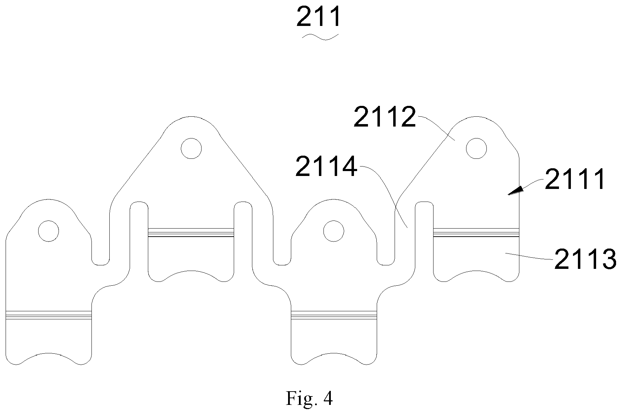

Further, as shown in Fig. 4, the guide bar 211 includes four main bodies 2111 provided along the width direction of the tray 240, which correspond to the four battery units in the present embodiment, in which two adjacent main bodies 2111 are connected by a connecting segment 2114, so that the four battery cells 100 may be connected in parallel in the width direction of the tray 240. The front end of the main body 2111 is positive zone 2112, used for connecting to a positive electrode 101 of the battery cell 100; the back end of the main body 2111 is negative zone 2113, used for connecting to a negative electrode 102 of the battery cell 100.

In the present embodiment, a detecting nickel sheet 233 is provided on the flexible circuit board 230 for connecting to at least one of the positive busbars 210, negative busbar 212 and guide bars 211; accommodating slots 245 are provided on two sides in the width direction of the tray 240, provided for accommodating the detecting nickel sheet 233 on the flexible circuit board 230. As shown in Fig. 1, the flexible circuit board 230 is extending and provided along the length direction of the tray 240 on one side of the tray 240; the flexible circuit board 230 is provided with the same amount of extending part 232 as the amount of the battery cells 100 in a battery unit, used for mounting the detecting nickel sheets 233. In the present embodiment, preferably, the positive busbar 210, the negative busbar 212 and a plurality of the guide bars 211 are connected to the detecting nickel sheets 233 correspondingly, so as to realize the comprehensive monitoring of the temperature and voltage signals of the battery module assembled by the CCS assembly 200 provided in the present embodiment. An end of the flexible circuit board 230 near the connector 220 is bent to form a connecting part 231, used for connecting to the connector 220. Specifically, the extending parts 232 and/or the detecting nickel sheets 233 are embedded into the accommodating slots 245, and the detecting nickel sheets 233 are extending to the adjacent positive busbar 210, the adjacent negative busbar 212 and the adjacent guide bars 211. The accommodating slots 245 may provide structural protection for the extending parts 232 and the detecting nickel sheets 233, which also facilitates the assembly of the flexible circuit board 230 to the tray 240 and reduces the overall thickness of the CCS assembly 200.

Further, defining a plurality of the accommodating slots 245 on one side along the width direction of the tray 240 as a first slot group, and defining a plurality of the accommodating slots 245 on another side along the width direction of the 240 as a second slot group; the first slot group and the second slot group are provided on the tray 240 centrosymmetrically. Such a setup, as similar to the mounting base 241 mentioned above, enables the tray 240 to be adapted to different types of assembly of battery modules by rotating it 180° along the centrosymmetric point of the first slot group and the second slot group.

In the present embodiment, as shown in Fig. 2 and Fig. 3, in the width direction of the tray 240, the mounting base 241 of the positive end and the mounting base 241 of the negative end are provided staggered. In such a setup, a length of the connecting part 231 formed by bending the flexible circuit board 230 may be reduced, so that the probability of interference between the connecting part 231 and other components on a side of connector 220 during assembly may be reduced, providing a high level of safety. It is to be noted that the flexible circuit board 230 is assembled close to the mounting base 241 in the width direction of the tray 240.

In the present embodiment, as shown in Fig. 1 to Fig. 3, a fixing slot 246 for accommodating battery cell 100 is provided on an interior side of the tray 240, in which a positive hole 242 and a negative hole 243 are penetratingly provided on a bottom of the fixing slot 246; the positive hole 242 is provided for exposing a positive electrode 101 of the battery cell 100 on an exterior side of the tray 240, while the negative hole 243 is provided for exposing a negative electrode 102 of the battery cell 100 on the exterior side of the tray 240; and the accommodating slot 245 is provided on the exterior side of the tray 240, in which the accommodating slot 245 is in communication with the positive hole 242 and/or the negative hole 243 of the fixing slot 246 adjacent thereto. In the present embodiment, the accommodating slot 245 is in communication with the negative hole 243 adjacent thereto. The detecting nickel sheet 233 is connected to the negative zone 2113 of the guide bar 211.

In the other embodiments, the accommodating slot 245 may be in communication with the positive hole 242. The detecting nickel sheet 233 is connected to the positive zone 2112 of the guide bar 211. Admittedly, in the other embodiments, the detecting nickel sheet 233 may also be connected to the positive electrode 101 or the negative electrode 102 directly.

In the present embodiment, a temperature-detecting hole 244 is further penetratingly provided on the bottom of the fixing slot 246. The temperature-detecting hole 244 is used for exposing a negative electrode 102 of the battery cell 100 on an exterior side of the tray 240; a single NTC may be provided in the temperature-detecting hole 244 and connected to the negative electrode 102, used for temperature monitoring of the battery cell 100.

### Embodiment 2

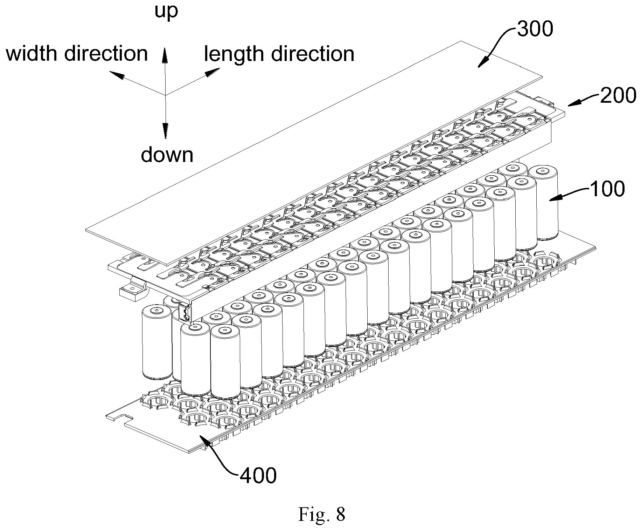

Provided in the present embodiment is a battery module, referring to Fig. 8 to Fig. 11, including a battery supporting frame 400, battery cells 100, CCS assembly 200 and thermally conductive structural adhesive 300; battery cells 100 are mounted on an upper side of the battery supporting frame 400; the CCS assembly 200 is lapped on an upper side of the battery cells 100, provided for connecting two adjacent battery cells 100 in series in the length direction of the battery supporting frame 400, and connecting two adjacent battery cells 100 in parallel in the width direction of the battery supporting frame 400; and thermally conductive structural adhesive 300 is coated on an upper surface of the CCS assembly 200, so that heat of the battery module is dissipated through a side of the thermally conductive structural adhesive 300. As shown in Fig. 8, the battery cells 100 herein are cylindrical batteries. The battery supporting frame 400 provides support for the battery cells 100, provided for cooperating with the CCS assembly 200 to restrict and fix the battery cells 100 along a longitudinal direction; the thermally conductive structural adhesive 300 coated on the upper surface of the CCS assembly 200, on the one hand, may adhere and fix each component of the CCS assembly 200, which facilitates the CCS assembly 200 to be fed as a whole and increases the assembling efficiency of the battery module; on the other hand, the thermally conductive structural adhesive 300 may conduct the heat inside the battery module through the part of thermally conductive structural adhesive 300, so as to dissipate the heat generating from the working process of the battery module from here, so that a step of mounting a serpentine tube between the battery cells 100 may be avoided, which may increase the density of the battery cells 100 inside the battery module effectively, thereby increasing the energy density of the battery module. It is to be noted that air-cooling or additional assembling of a cooling device such as a liquid-cooling plate on an upper side of the thermally conductive structural adhesive 300 may be selected based on demand; the additional assembling of the liquid-cooling plate may further increase the heat-dissipating efficiency of the battery module.

In the present embodiment, the distance between two adjacent battery cells 100 is not less than 2 mm. Optionally, the distance between two adjacent battery cells 100 is 2.2mm, 2.4mm or 2.6 mm. Preferably, the distance between two adjacent battery cells 100 is 2 mm. In such a setup, a short circuit may be avoided between the two adjacent battery cells 100, which may increase the battery density, thereby facilitating to increase the energy density of the battery module.

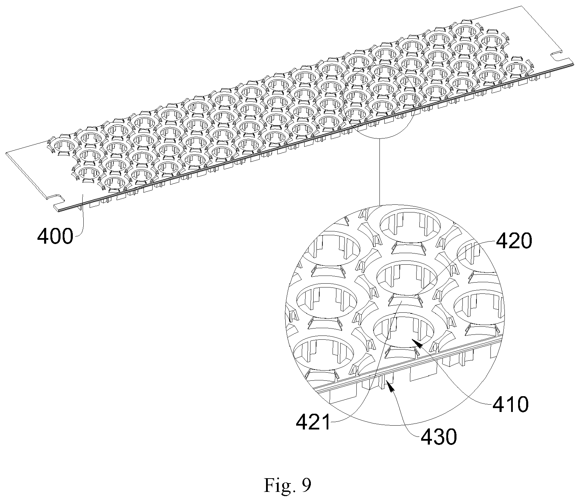

As shown in Fig. 9, Fig. 10 and Fig. 11, the battery supporting frame 400 is penetratingly provided with pressure relief holes 410 corresponding to the battery cells 100, so that explosion-proof valves of battery cells 100 are exposed on a lower surface of the battery supporting frame 400 through the pressure relief holes 410 corresponding to the battery cells 100; and an extending protrusion 430 is provided on the lower surface of the battery supporting frame 400, the extending protrusion 430 being provided in a direction extending away from the battery supporting frame 400. In the present embodiment, the extending protrusion 430 is provided in a direction extending away from the battery supporting frame 400, that is, the extending protrusion 430 is provided extending downwards so that a pressure relief gap is provided between the lower surface of the battery module assembled into the battery housing and the bottom shield of the battery pack, in which the pressure relief gap may be connected to the explosion-proof valve of the battery cell 100 through the pressure relief hole 410. During use, when thermal runaway occurs in battery cells 100, the high-temperature and high-pressure gas inside the battery cell 100 overflows through the explosion-proof valve and flows through the pressure relief hole 410 into the pressure relief gap; meanwhile, the extending protrusion 430 abuts the bottom shield, which may provide support to the battery cells 100 of the battery supporting frame 400, so as to facilitate to increase the structural strength of the battery pack assembled and formed by the battery module.

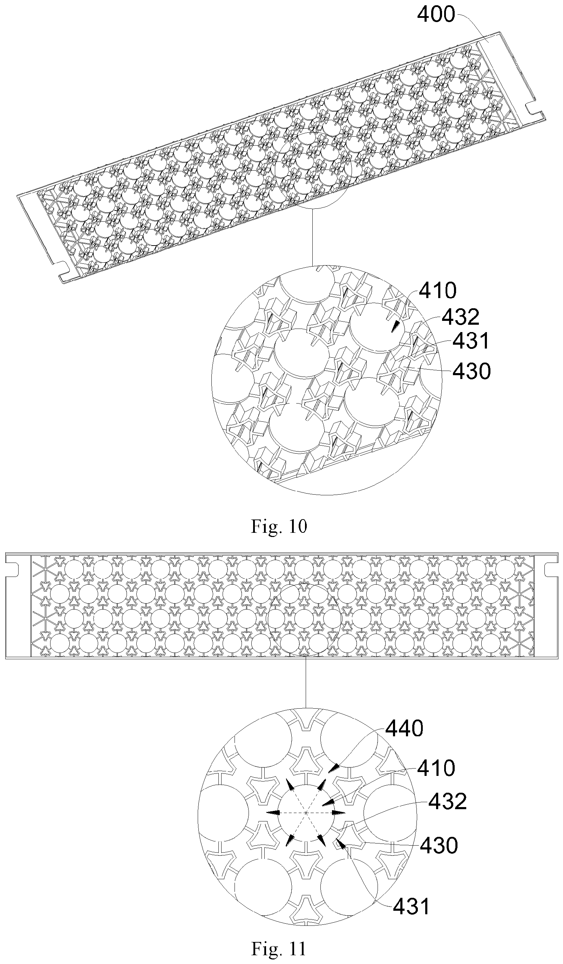

Further, as shown in Fig. 10 and Fig. 11, a plurality of the extending protrusions 430 is provided around the pressure relief hole 410. Further, a plurality of the extending protrusions 430 is evenly spaced circumferentially around each pressure relief hole 410. In the present embodiment, a gap between the two adjacent extending protrusions 430 forms a pressure relief hole 410. Specifically shown in Fig. 11, six extending protrusions 430 are evenly spaced circumferentially around each pressure relief hole. When thermal runaway occurs in a battery cell 100 corresponding to one pressure relief hole 410, the high-temperature and high-pressure gas enters the pressure relief slit through the pressure relief hole 410 and is relieved by escaping through the pressure relief gap 440. The pressure relief gap 440 diverts the high-temperature and high-pressure gas that enters the pressure relief gap when the battery cell 100 suffers thermal runaway. Without affecting the normal pressure relief, the extending protrusions 430 around the pressure relief hole 410 block the high-temperature and high-pressure gas at the pressure relief hole 410, which slows down the diffusion of the high-temperature and high-pressure gas at the bottom of the battery supporting frame 400, thereby delaying the diffusion of this thermal runaway gas to the other normal battery cells 100 around. Therefore, the user is guaranteed to have sufficient time to deal with the thermal runaway problem, which may, to a certain extent, prevent a large area of thermal runaway from occurring in battery cells 100, thereby ensuring the safety of the battery module. At the same time, the extending protrusions 430 evenly distributed around the pressure relief gap 440 may evenly divert the high-temperature and high-pressure gas, so that the volume of high-temperature and high-pressure gas escaping around the battery cell 100 suffering thermal runaway is even, instead of concentrating on a certain battery cell 100, thereby ensuring the safety of the surrounding battery cells 100.

In the present embodiment, the pressure relief holes 410 are in communication with form a pressure relief path.

It is to be noted that each pressure relief hole 410 corresponds to each battery cell 100, so that the distance between the two adjacent pressure relief holes is not less than 2 mm.

As shown in Fig. 11, a side of the extending protrusion 430 near the pressure relief hole 410 is provided with a cushioning surface 431, in which the cushioning surface 431 is a rounded arc surface whose center of curvature is located in a side of the pressure relief hole 410. The rounded arc surface may reflect the high-temperature and high-pressure gas escaping from the corresponding pressure relief holes, so as to buffer the high-temperature and high-pressure gas.

Further, a reinforcing rib 432 is provided on the cushioning surface 431, the reinforcing rib 432 extending towards the side of the pressure relief hole 410; and the reinforcing rib 432 is connected to the battery supporting frame 400. In the present embodiment, on the one side, the reinforcing rib 432 may increase the structural strength of the extending protrusions 430 on the battery supporting frame 400; on the flip side, the reinforcing rib 432 may cooperate with the cushioning surface 431 to block the high-temperature and high-pressure gas escaping from the corresponding pressure relief holes so as to buffer, which delays the diffusion of the high-temperature and high-pressure gas to the other normal battery cells 100 without affecting the normal pressure relief, so as to guarantee the user to have sufficient time to deal with the problem, thereby ensuring the safety of the battery module.

As shown in Fig. 9, a plurality of restricting protrusions 420 is provided around a perimeter of the pressure relief hole 410; the restricting protrusion 420 is provided with a restricting surface towards a side of the pressure relief hole 410; the restricting surface 421 is rounded arc surface whose center of curvature is located in the side of the pressure relief hole 410; and the restricting protrusions 420 are located on an upper surface of the battery supporting frame 400. In the present embodiment, six restricting protrusions 420 are evenly spaced circumferentially around each pressure relief hole 410. The restricting protrusions 420 are used to restrict the battery cells 100 and increase the structural stability of the battery cells 100 assembled on the battery supporting frame 400. The restricting surface 421 is a rounded arc surface in structure, so that the restricting protrusions 420 may abut the peripheral side of the battery cells, which provides a better restricting and fixing effect.

Provided further in the present embodiment is a battery pack, including an upper liquid-cooling plate (not shown in the figure) and the battery module mentioned above; the upper liquid-cooling plate abuts an upper surface of the thermally conductive structural adhesive 300. The upper liquid-cooling plate may increase the heat-dissipating efficiency of the battery module effectively.

Further, the battery pack further includes a bottom shield (not shown in the figure), the battery supporting frame 400 abutting the bottom shield.

In some embodiments, a lower side of the bottom shield may be provided with a lower liquid-cooling plate (not shown in the figure); the bottom shield and the lower liquid-cooling plate are glued by the thermally conductive structural adhesive. In such a setup, the heat of the high-temperature and high-pressure gas inside the pressure relief slit may transfers to the lower liquid-cooling plate quickly through the thermally conductive structural adhesive, so as to achieve a rapid cooling of the high temperature inside the pressure relief slit.

In the other embodiment, the lower liquid-cooling plate may be provided between the bottom shield and the battery supporting frame 400, or the lower liquid-cooling plate may be provided as the bottom shield. In such a setup, the extending protrusions 430 abut a surface of the lower liquid-cooling plate, in which the upper surface of the lower liquid-cooling plate and the lower surface of the battery supporting frame 400 are constituted to restrict as the pressure relief slit collectively. Under such a structural state, when thermal runaway occurs in battery cells 100, the high-temperature and high-pressure gas enters the pressure relief slit and contacts the lower liquid-cooling plate directly, which may further increase the heat-dissipating efficiency of the high-temperature and high-pressure gas inside the pressure relief slit, so as to increase the heat-dissipating efficiency of the battery module during thermal runaway, thereby increasing the safety of the battery pack.

## Claims

1. A CCS assembly, **characterized by** comprising:
a tray (240);
a positive busbar (210), provided on an end of the tray (240), the end of the tray (240) on which the positive busbar (210) is assembled being a positive end;
a negative busbar (212), provided on an opposite end of the tray (240), opposite to the positive busbar (210), the end of the tray (240) on which the negative busbar (210) is assembled being a negative end;
guide bars (211), provided on the tray (240), a plurality of the guide bars (211) being sequentially connected in series along the positive busbar (210) to the negative busbar (212), the positive busbar (210) and the negative busbar (212) being connected in series with the adjacent guide bars (211) respectively;
a flexible circuit board (230), provided on a side in a width direction of the tray (240), the positive end and the negative end being both provided with a mounting base (241) respectively; and
a connector (220), the mounting base being provided for mounting the connector (220), the flexible circuit board (230) being connected to the connector (220).

2. The CCS assembly according to claim 1, wherein a detecting nickel sheet (233) is provided on the flexible circuit board (230), wherein the detecting nickel sheet (233) is provided for connecting at least one of the positive busbars (210), the negative busbar (212) and the guide bars (211); and
accommodating slots (245) are provided on two sides in the width direction of the tray (240), provided for accommodating the detecting nickel sheet (233) on the flexible circuit board (230).

3. The CCS assembly according to claim 2, wherein a plurality of the accommodating slots (245) on one side along the width direction of the tray (240) is defined as a first slot group, and a plurality of the accommodating slots (245) on another side along the width direction of the tray (240) is defined as a second slot group; and
the first slot group and the second slot group are provided on the tray (240) centrosymmetrically.

4. The CCS assembly according to any one of claims 1-3, wherein the mounting base (241) on the positive end and the mounting base (241) on the negative end are provided on the tray (240) centrosymmetrically.

5. The CCS assembly according to claim 1, wherein the mounting base (241) and the tray (240) are integrally formed by injection molding.

6. The CCS assembly according to claim 2, wherein a fixing slot (246) for accommodating a battery cell (100) is provided on an interior side of the tray (240), wherein a positive hole (242) and a negative hole (243) are penetratingly provided on a bottom of the fixing slot (246); the positive hole (242) is provided for exposing a positive electrode (101) of the battery cell (100) on an exterior side of the tray (240), while the negative hole (243) is provided for exposing a negative electrode (102) of the battery cell (100) on the exterior side of the tray (240); and
the accommodating slot (245) is provided on the exterior side of the tray (240), wherein the accommodating slot (245) is in communication with the positive hole (242) and/or the negative hole (243) of the fixing slot (246) adjacent thereto.

7. The CCS assembly according to claim 6, wherein the accommodating slot (245) is in communication with the negative hole (243) of the fixing slot (246) adjacent thereto.

8. The CCS assembly according to claim 1, wherein the mounting base (241) of the positive end and the mounting base (241) of the negative end are provided staggered in the width direction of the tray (240).

9. A battery module, **characterized by** comprising the CCS assembly (200) as claimed in any one of claims 1-8.

10. The battery module according to claim 9, **characterized by** further comprising:
a battery supporting frame (400);
battery cells (100), mounted on an upper side of the battery supporting frame (400),
the CCS assembly (200) being lapped on an upper side of the battery cells (100), the CCS assembly being provided for connecting two adjacent battery cells (100) in series in a length direction of the battery supporting frame (400), and connecting two adjacent battery cells (100) in parallel in the width direction of the battery supporting frame (400); and
thermally conductive structural adhesive (300), coated on an upper surface of the CCS assembly (200), provided for dissipating heat of the battery module through a side with the thermally conductive structural adhesive (300).

11. The battery module according to claim 10, wherein a distance between two adjacent battery cells (100) is not less than 2 mm.

12. The battery module according to claim 10, wherein the battery supporting frame (400) is penetratingly provided with pressure relief holes (410) corresponding to the battery cells (100), so that explosion-proof valves of battery cells (100) are exposed on a lower surface of the battery supporting frame (400) through the pressure relief holes (410) corresponding to the battery cells (100); and
an extending protrusion (430) is provided on the lower surface of the battery supporting frame (400), the extending protrusion (430) being provided in a direction extending away from the battery supporting frame (400).

13. The battery module according to claim 12, wherein a plurality of the extending protrusions (430) is evenly spaced circumferentially around each pressure relief holes (410).

14. The battery module according to claim 12 or 13, wherein a side of the extending protrusion (430) near the pressure relief holes (410) is provided with a cushioning surface (431), wherein the cushioning surface (431) is a rounded arc surface whose center of curvature is located in a side of the pressure relief hole (410).

15. The battery module according to claim 14, wherein a reinforcing rib (432) is provided on the cushioning surface (431), the reinforcing rib (432) extending towards the side of the pressure relief hole (410); and
the reinforcing rib (432) is connected to the battery supporting frame (400).

16. The battery module according to claim 12 or 13, wherein a plurality of restricting protrusions (420) is provided around a perimeter of the pressure relief hole (410); the restricting protrusion (420) is provided with a restricting surface (421) towards a side of the pressure relief hole (410); the restricting surface (421) is rounded arc surface whose center of curvature is located in the side of the pressure relief hole (410); and
the restricting protrusions (420) are located on an upper surface of the battery supporting frame (400).

17. A battery pack, comprising the battery module as claimed in claims 9-16.
